# EUROPEAN PATENT SPECIFICATION

(11) **EP 4 168 510 B1**
(45) Date of publication and mention of the grant of the patent: **10.07.2024**
(21) Application number: 21730631.5
(22) Date of filing: 11.06.2021
(51) Int. Cl.: C09K 21/12, C09K 21/14

(54) **PHOSPHORUS-CONTAINING FLAME RETARDANT MIXTURES, A PROCESS FOR PRODUCTION OF SAID MIXTURES AND USE OF SAID MIXTURES, AND ALSO EPOXY RESIN FORMULATIONS WHICH COMPRISE SAID FLAME RETARDANT MIXTURES**
PHOSPHORHALTIGE FLAMMSCHUTZMISCHUNGEN, VERFAHREN ZU IHRER HERSTELLUNG UND IHRE VERWENDUNG SOWIE EPOXIDHARZFORMULIERUNGEN MIT DEN FLAMMSCHUTZMISCHUNGEN
MÉLANGES PHOSPHOREUX RETARDEURS DE FLAMMES CONTENANT DU PHOSPHORE, LEUR PROCÉDÉ DE FABRICATION ET LEUR UTILISATION AINSI QUE FORMULATIONS DE RÉSINE ÉPOXY CONTENANT LESDITS MÉLANGES RETARDEURS DE FLAMMES

(30) Priority: 17.06.2020 EP 20180542
(43) Date of publication of application: 26.04.2023
(73) Proprietor: Clariant International Ltd, 4132 Muttenz (CH)
(72) Inventor: OSTEROD, Frank, 50374 Erftstadt (DE); SICKEN, Martin, 51149 Köln (DE); BAUER, Harald, 50170 Kerpen (DE); HAUENSTEIN, Oliver, 53225 Bonn (DE)
(74) Representative: Clariant Produkte (Deutschland) GmbH
(86) International application number: PCT/EP2021/065804
(87) International publication number: WO 2021/254908

(56) References cited:
- EP-A1- 1 046 661
- WO-A1-2004/022640
- CA-A1- 2 826 672
- DE-A1- 4 427 456
- US-A1- 2019 023 873
- US-A1- 2019 085 151

## Description

Composite materials that are widely used in order to save weight and take the form of composite components in the transport sector (rail, air, ship, road, etc.) are subject to strict fire-protection requirements intended to ensure the safety of the users or passengers.

Strict limiting values for behaviour in relation to fire and smoke, and for smoke toxicity, are stipulated in particular in the European standard EN 45545-2 relating to rail transport, and also in FAR 25.853 relating to air travel.

There are various available methods for the manufacture of such composite components. The use of solvents of the type described for example in the electronics sector for the manufacture of prepregs (US-2012/0279769A1) is often not desired or technically not possible.

Such formulations, which can comprise not only the actual resin but also other components such as fillers, flame retardants and hardeners, must therefore have a viscosity that is sufficiently low to provide uniform wetting of the reinforcement material (e.g. glass fibres or carbon fibres in the form of fibres, woven fabrics, laid scrims or knitted fabrics) and to permit manufacture of the corresponding component.

The resin used must therefore have a low initial viscosity and good flow behaviour and wetting behaviour, so that production of the composite components can be technically and economically successful. The flame retardant used must moreover have no adverse effect on processing.

Various resin systems are used for the manufacture of composite components, but many of these do not have sufficiently good behaviour in relation to fire, and it is therefore necessary in such cases to employ appropriate flame retardants in order to permit use, in particular in the transport sector.

Use of solid flame retardants for manufacture of composite components is often impossible because the use of such flame retardants leads to a major increase of viscosity and therefore prevents manufacture of the composite components or requires considerable quantities of solvents, which then in turn require removal.

In the case of the resin transfer moulding (RTM) process, which is a popular method for the production of mouldings, plungers are used to inject the moulding composition from a, mostly heated, upstream chamber by way of distributor channels into the shaping chamber, in which heat and pressure are used to harden the moulding composition.

When the abovementioned formulations are used not only in the RTM process but also in infusion processes, a filtration effect is often observed.

EP-3309190A1 describes a process for the production of epoxy resins with use of substituted phosphinic salts which are added as additive filler. Associated disadvantages are the major viscosity increase during processing and the fact that the filler disadvantageously remains in the final product.

DE-4308187A1 describes the production of phosphorus-modified epoxy resins with use of phosphinic anhydrides in solvent-containing systems which incur high drying costs.

EP-2794623B1 describes the use of dialkylphosphinic acid mixtures via mixing into a polymer system. The epoxy resins thus produced exhibit reduced thermal expansion.

CA-A-2826672 describes the use of phosphorus-modified epoxy resins which comprise two regioisomers. In this case, 9,10-dihydro-9-oxa 10-phosphaphenanthrene-10-oxide (DOPO), where both regioisomers have a P-C bond to the C₂ and C₃ carbon atom of the epoxide reacted, is used for the modification of the epoxy resin.

WO-2017/117383A1 describes the use of fire-protected composite components in the airline sector. The epoxy resins required for this purpose are modified with DOPO or diethylphosphinic acid in the presence of a solvent, and the epoxy resins are liquid or solid and have an epoxy equivalent of 170 to 450 g/mol.

US 2019/085151 A1 describes reactive dialkylphosphinic acid esters as flame retardants in flexible polyurethane foams.

In particular, there is a lack of flame retardants and flame retardant mixtures which, even when used in small quantities, achieve good flame retardancy in the epoxy resin and do not adversely affect the viscosity of the epoxy resin formulation and therefore exhibit good wetting behaviour. There is moreover a lack of fillerfree, flame-retardant epoxy resin formulations which are also amenable to solvent-free processing and which, in the final component, have good mechanical and physical properties (e.g. high glass transition temperatures).

This object is achieved according to the invention via phosphorus-containing flame retardant mixtures, comprising individual flame retardants having in each case one or more functional groups of the formulae (I), (II) and (III), 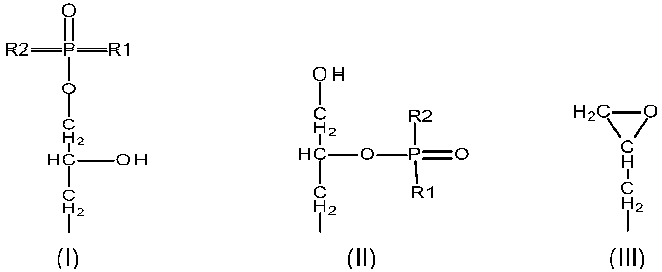 where, based on the total quantity of functional groups in the flame retardant mixture, 1 to 98 mol% of functional groups of the formula (I), 1 to 35 mol% of functional groups of the formula (II) and 1 to 98 mol% of functional groups of the formula (III) are present, and where R¹ and R² are identical or different and are mutually independently hydrogen, C₁- to C₁₂-alkyl, linear or branched, and/or C₆-to C₁₈-aryl and the entirety of (I), (II) and (III) is always 100 mol%,
characterized in that in the mixture of the formulae (I) and (II) the proportion T (in mol%) of formula (II) is calculated from T = [y/(x+y)]* 100%, where x is the quantity of formula (I) and y is the quantity of formula (II), in each case in mol%, wherein T is 20 to 45 mol%.

It is preferable that in the phosphorus-containing flame retardant mixtures R¹ and R² are identical or different and are mutually independently hydrogen, methyl, ethyl, n-propyl, isopropyl, n-butyl, isobutyl, sec-butyl, tert-butyl, n-pentyl, 2-methylbutyl, 3-methylbutyl, 3-methylbut-2-yl, 2-methylbut-2-yl, 2,2-dimethylpropyl, hexyl, heptyl, octyl, nonyl, decyl, cyclopentyl, cyclopentylethyl, cyclohexyl, cyclohexylethyl and/or phenyl.

It is particularly preferable that R¹ and R² are identical or different and are mutually independently methyl, ethyl, n-propyl, isopropyl, n-butyl, isobutyl, sec-butyl and/or tert-butyl.

It is preferable that the phosphorus-containing flame retardant mixtures comprise
5 to 94 mol% of formula (I),
3 to 35 mol% of formula (II) and
3 to 92 mol% of formula (III),
where the entirety of (I), (II) and (III) is always 100 mol%.

It is particularly preferable that the phosphorus-containing flame retardant mixtures comprise
25 to 90 mol% of formula (I),
5 to 30 mol% of formula (II) and
5 to 70 mol% of formula (III),
where the entirety of (I), (II) and (III) is always 100 mol%.

The phosphorus-containing flame retardant mixtures of the invention can also be present in a form such that the individual flame retardants having the functional groups (I), (II) and (III) in the flame retardant mixtures correspond to the formulae R²¹-O-(I), R²¹-O-(II) and/or R²¹-O-(III), where R²¹ means linear or branched alkyl structures having 2 to 8 carbon atoms and/or means polypropylene oxides of the type -[-CH(CH₃)-CH₂-O-]_{K}-H or
-[-CH₂-CH(CH₃)-O-]_{K}-H and/or means polyethylene oxides of the type -[-CH₂-CH₂-O-]_{K}-H, where K is in each case an integer from 1 to 12.

In another embodiment, the individual flame retardants having the functional groups (I), (II) and (III) in the flame retardant mixtures correspond to the formula DO-[-CH₂-CH₂-O-]ᵣ-E and/or
D-O-[-CH(CH₃)-CH₂-O-]ᵣ-E, where D and E can be identical or different and in each case represent the formula (I), (II) and/or (III), and r is an integer from 1 to 12.

In yet another embodiment, the individual flame retardants having the functional groups (I), (II) and (III) in the flame retardant mixtures correspond to the formula (IV)

E-Q-D (IV),

where Q represents the following formula (V) 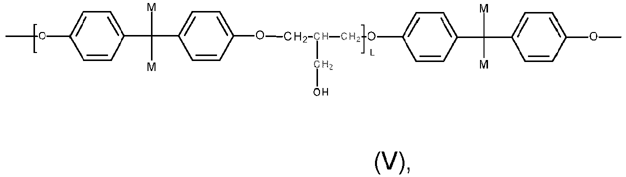 in which M is hydrogen or methyl and where D and E can be identical or different and in each case represent the formulae (I), (II) and/or (III) and L is an integer from 0 to 5

In another embodiment, the individual flame retardants having the functional groups (I), (II) and (III) in the flame retardant mixtures correspond to the formula (VI) 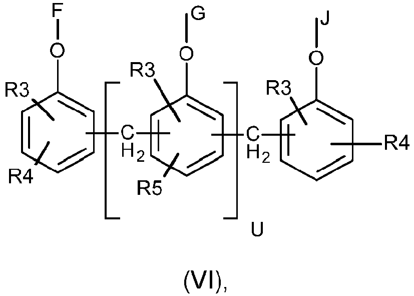 where F, G and J can be identical or different and in each case represent the formulae (I), (II) and/or (III), U is an integer between 1 and 12, R³ is hydrogen, methyl, ethyl, propyl and/or butyl, and R⁴ and R⁵ are mutually independently hydrogen, methyl and/or (VII) 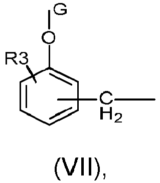 where G and R³ are defined as above.

Finally, the individual flame retardants having the functional groups (I), (II) and (III) in the flame retardant mixtures can correspond to the formula (VIII) 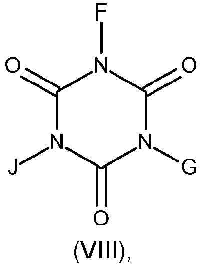 where F, G and J can be identical or different and in each case represent the formulae (I), (II) and/or (III).

It is preferable that the phosphorus-containing flame retardant mixtures of the invention are non-halogenated in accordance with the standard IEC 61249-2-21 or are halogen-free.

The invention also provides a process for the production of flame retardant mixtures according to one or more of Claims 1 to 20, characterized in that a reaction of at least one phosphinic acid, alkylphosphinic acid and/or dialkylphosphinic acid with the opened ring of an epoxide takes place in the presence of a catalyst.

It is preferable that the catalyst is ethyltriphenylphosphonium chloride, ethyltriphenylphosphonium bromide, ethyltriphenylphosphonium iodide, ethyltriphenylphosphonium acetate, ethyltriphenylphosphonium phosphate, tetrabutylphosphonium chloride, tetrabutylphosphonium bromide, tetrabutylphosphonium iodide, tetrabutylphosphonium acetate, tetrabutylphosphonium acetate acetic acid complex, butyltriphenylphosphonium tetrabromobisphenate, butyltriphenylphosphonium bisphenate, butyltriphenylphosphonium bromide and/or butyltriphenylphosphonium bicarbonate.

It is preferable that in the process of the invention a dialkylphosphinic acid is reacted with an epoxy novolac at 95°C to 160°C for 1 to 6 hours.

The invention also provides the use of phosphorus-containing flame retardant mixtures according to one or more of Claims 1 to 20 for the production of epoxy resin formulations.

The invention in particular provides flame-retardant epoxy resin formulations comprising at least one phosphorus-containing flame retardant mixture according to one or more of Claims 1 to 20, epoxy resins, hardeners, accelerators, rheology additives and/or other additions.

It is preferable that the other additions are light stabilizers, colour pigments, dispersion additives, antifoams, blowing agents, foam-formers, additives for the improvement of mechanical strength, additives for the adjustment of thermal conductivity, glass spheres, glass powders, glass fibre, carbon fibre and/or thixotropizing agents.

The invention also provides a process for the production of the abovementioned epoxy resin formulations, characterized in that the phosphorus-containing flame retardant mixtures according to one or more of Claims 1 to 20 are reacted with epoxy resin, hardener, accelerator, rheology additive and optionally other additions.

It is preferable that no solvents are used in the process of the invention.

Finally, the invention also provides the use of these epoxy resin formulations for, or in, flame-retardant composite components, adhesives, pastes, foams, foam compositions, sealing compositions, hotmelt adhesives, fillers, potting compositions, trowelling compositions, finishing mats, coating systems, fibres, prepregs, masking lacquers for soldering, thermally conductive layers, thermally conductive pastes, shock-absorber layers, LEDs, sensors, insulating applications, circuit boards, antennas, and also in coating systems.

It is very particularly preferable that R¹ and R², are, mutually independently, ethyl or propyl.

In the case of the flame retardant mixtures of the formulae R²¹-O-(I), R²¹-O-(II) and/or R²¹-O-(III), the alkyl structures R²¹ preferably have 2 to 8 carbon atoms.

In the case of the compounds of the formula (XII) or (V), L is preferably 0 to 5.

### In formula (VI) it is preferable that

| | |
|---|---|
| U | is 1 to 6, |
| R³ | is hydrogen, methyl or ethyl |
| R⁴ | is hydrogen or methyl and |
| R⁵ | is hydrogen or methyl. |

According to the invention, the flame retardants having the functional groups (I), (II) and (III) are produced by reaction of at least one phosphinic acid with a monofunctional, difunctional, polyfunctional and/or heterocyclic epoxy compound.

It is therefore possible that various types of flame retardants are present in the flame retardant mixtures of the invention.

For the production of these flame retardant mixtures it is preferable to use epoxy resins which have an epoxy equivalent weight (EEW) below 210 g/mol, among which are preferably oligomer mixtures of diglycidyl ether based on bisphenol A and also novolac resins based on phenol.

If heterocyclic epoxy compounds are used for the production of the flame retardant mixtures of the invention, in such cases triglycidyl isocyanurates are particularly suitable.

The phosphorus-containing flame retardant mixtures of the invention preferable comprise less than 900 ppm of chlorine, less than 900 ppm of bromine and in total less than 1500 ppm of halogens (in the form of halogen-containing substances), and therefore are non-halogenated in accordance with the standard IEC 61249-2-21.

In another preferred embodiment, the phosphorus-containing flame retardant mixtures are halogen-free.

It is preferable that the synthesis of the flame retardant mixtures of the invention is achieved with ring-opening of epoxy groups and with formation of a covalent P-O-C bond via formation of phosphinic ester structures of the type R¹R²P(=O)O-CH₂-CH(OH)-CH₂- and, respectively, of the type R¹R²P(=O)O-CH(CH₂OH)-CH₂-.

It is preferable that the catalyst is ethyltriphenylphosphonium iodide, which is used in quantities below 0.1 per cent by weight (%), based on the flame retardant mixture. The resultant total halogen content is below 1500 ppm.

It is preferable that a dialkylphosphinic acid is reacted with an epoxy novolac in the process of the invention at 120°C to 150°C for 3 to 6 hours in the presence of the catalyst.

Surprisingly, it has been found according to the present invention that the resultant modified epoxy resins, produced from the phosphinic acids (and, respectively, from the phosphinic acid mixtures) and from the appropriate epoxy resins have a relatively low viscosity and therefore improved processing conditions if a specific isomer ratio of the two resultant esters is successfully established during the synthesis. In particular, the catalyst is responsible for the above.

Two regioisomers or regioisomer mixtures of the modified resins are obtained, these having the distinguishing feature that the resultant P-O-C phosphinic-ester structure can occur either at the CH₂ group or else at the CH group of the oxirane ring. For each oxirane group, however, only reaction with one equivalent of the respective phosphinic acid is possible.

Surprisingly, it has moreover been found that these different (regio)isomers in the modified epoxy resins, and the quantitative proportions that are formed, can be controlled by way of the two moieties R¹ and R² on the phosphinic acid and by way of the catalyst.

The ratio of the regioisomers or mixtures of these in turn has a decisive effect on the viscosity of the resultant phosphorus-modified epoxy resins.

The products according to the invention have a low viscosity and subsequently, in the hardened composite component, lead to good fire behaviour; i.e. the final products are less combustible. They also have good flame retardant properties and high phosphorus content. They moreover comprise no P-dimer by-products, R¹R²P(=O)-O-P(=O)R¹R², which are toxic and exhibit a problematic increased level of migration behaviour.

It is moreover possible in the production process of the invention to control the isomer ratio by means of catalyst, and to achieve targeted adjustment to a low viscosity.

The abovementioned catalysts based on quaternary phosphonium structures have proved to be particularly suitable for the process of the invention.

It is moreover possible, through the selection of a suitable catalyst, to avoid reaction of the epoxy resins with one another, with consumption of epoxy groups. Reaction of the epoxy resins with one another would cause an undesired viscosity increase, and additionally the consumption of the epoxy groups would adversely affect hardening by the hardener (lower glass transition temperatures).

Because of the relatively high viscosity, it would then moreover be necessary to use a solvent during processing, or to operate at relatively high temperature; this would lead to unnecessarily high energy cost.

The catalyst also reduces the proportion of possible by-products that can arise during the reaction with the mono- or disubstituted phosphinic acids. Formation of corresponding dimers is thus reduced or avoided, and the modified epoxy resin therefore has a relatively high phosphorus content together with a low viscosity.

The avoidance of volatile, low-molecular-weight, non-migration-resistant dimeric phosphorus components, which can otherwise arise in such reactions, moreover achieves improved long-term stability and surface quality in the subsequent final thermoset product.

With the process of the invention it is possible to achieve different phosphorus contents in the modified epoxy resins, in that only a certain proportion of the epoxy groups is modified by the phosphinic ester structure, and some of the epoxy groups are not reacted. Depending on the number of remaining epoxy groups it is thus possible to achieve a favourable influence on crosslinking/hardening.

In a downstream hardening step, a hardener can be admixed with the lowviscosity epoxy resins thus modified, in order to obtain thermoset structures which have not only good flame retardancy properties but also high glass transition temperatures.

The familiar hardeners of the type known for epoxy resins can be used here. Curing by isocyanates, via reaction of the primary and secondary OH groups of the two regioisomers of the modified epoxy resin, is also advantageous.

Because of the relatively low viscosity, these components can be manufactured without use of solvents, and there is no need to use relatively high processing temperatures in order to reduce the viscosity. It is thus possible to conserve resources, time and energy in the manufacture of the corresponding products.

The epoxy resins modified according to the invention can be used as sole epoxy resin component or together with other epoxy resins or in a blend with other resins and/or fillers. Among the other resins are preferably phenolic resins, benzoxazines, cyanate esters and polyols of the type used in polyurethane chemistry.

Because of the relatively low viscosity of epoxy resins modified according to the invention, it is also possible to achieve problem-free incorporation of other fillers that in other circumstances are associated with a viscosity increase. The maximal viscosity at which the components can be produced can thus be realized with a higher filler content.

If components with reinforcement fibres are manufactured, better fibre wetting can be realized because of the reduced viscosity. The mechanical properties of the component are thus improved.

The epoxy resins modified according to the invention have particularly good suitability for modern production technologies such as resin transfer moulding (RTM) technology, liquid compression moulding (LCM) technology and other infusion technologies that require low resin-formulation viscosity at processing temperature.

Epoxy resins of the following formula (XVI) are suitable for phosphorusmodification with the mono- and disubstituted phosphinic acids of the type R¹R²P(=O)OH: 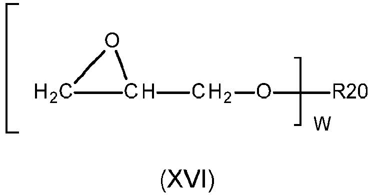 in which R²⁰ is a substituted or unsubstituted aromatic, aliphatic, cycloaliphatic or heterocyclic group and W is 1 to 14.

W is preferably 1 to 6.

The moiety R²⁰ in the formula (XVI) can derive from the following groups: resorcinol, catechol, hydroquinones, bisphenol, bisphenol A, bisphenol F, bisphenol K, phenol-formaldehyde novolac resin, alkyl-substituted phenol-formaldehyde resins, phenol-hydroxybenzaldehyde resins, cresolhydroxybenzaldehyde resins, dicyclopentadiene-phenol resins, dicyclopentadienesubstituted phenolic resins, tetramethylbiphenol resins and/or combinations thereof.

Epoxy resins having at least one epoxy structure are particularly suitable for the synthesis of the phosphorus-modified epoxy resin formulations of the invention.

Epoxy resins having a plurality of epoxy structures are also particularly preferable.

Epoxy-novolac resins are particularly suitable, preference here being given to epoxy-novolac resins based on phenol and cresol, and also to epoxidized bisphenol A resins or epoxidized bisphenol F resins.

Examples of possible monofunctional, difunctional or polyfunctional epoxy resins suitable for the production of the phosphorus-containing flame retardants are: diglycidyl ethers of bisphenol A with epoxy equivalent (EEW) between 177 and 189 of the type obtainable by way of example from Dow (Olin) with trade mark DER^{®} 330, and also cycloaliphatic epoxides and copolymers of glycidyl methacrylate ethers and styrene.

Preferred polyepoxides are epoxy novolac resins such as D.E.N.^{®} 438 or D.E.N.^{®} 439 (previously Dow/Olin), cresol epoxy novolac resins, triepoxy compounds such as Tactix^{®} 742, epoxidized bisphenol A novolac resins, dicyclopentadiene-phenol-epoxy-novolac resins, glycidyl ethers of tetraphenolethane; diglycidyl ethers of bisphenol A; diglycidyl ethers of bisphenol F and diglycidyl ethers of hydroquinone.

Aromatic polyglycidyl ethers such as bisphenol A diglycidyl ether, bisphenol F diglycidyl ether and bisphenol S diglycidyl ether, polyglycidyl ethers of phenol/formaldehyde resins and of cresol/formaldehyde resins, resorcinol diglycidyl ether, mono- and diglycidyl ether of polypropylene oxides and of polyethylene oxides, tetrakis(p-glycidylphenyl)ethane, di- and polyglycidyl esters of phthalic, isophthalic and terephthalic acid, and also of trimellitic acid.

It is also possible to use nitrogen-containing epoxy structures which bear one or two epoxy groups on the nitrogen. The starting material here can also comprise multiple occurrences of the nitrogen bearing epoxy groups. The nitrogen itself can also be part of a heterocyclic structure, as is the case for example in triglycidyl isocyanurate.

It is also possible to use hydantoin-epoxy resins and uracil-epoxy resins.

Suitable other epoxy compounds for the production of the phosphorus-containing flame retardant of the invention are tert-butanol glycidyl ether, trimethylolpropane triglycidyl ether, di- and polyglycidyl compounds of polyfunctional aliphatic alcohols such as 1,4-butanediol; oxazolidinone-modified epoxy resins; resins of the bisphenol S type,
for example BPS^{®}-200 from Nippon Kayaku Co., Ltd, EPX^{®}-30 from ACR Co., Epiculon^{®} EXA-1514 from Dainippon Ink & Chemicals Inc; bisphenol A resins such as Epicion^{®} N-3050, N-7050, N-9050 from Dainippon Ink & Chemicals., XAC^{®}-5005, GT^{®}-7004, 6484T, 6099 from Huntsman; bisphenol F resins such as YDF^{®}-2004, YDF^{®}2007 from Tohto Kasei Co.,
heterocyclic epoxy resins such as TEPIC^{®} from Nissan Chemical Industries, Ltd., Araldite^{®} PT 810 from Huntsman, epoxidized novolacs such as EPPN^{®}-201, EOCN^{®}-103, EGCN^{®}-1020, EOCN^{®}-1025 produced by Nippon Kayaku Co., Ltd, ECN^{®} 278, ECN^{®}-292 and ECN^{®} 299 from Asahi Chemical Industry Co., Ltd., GY^{®}-1180, ECN^{®}-1273 and ECN^{®}-1299 from CIBA GEIGY AG, YDCN^{®}-220L, YDCN^{®}-220HH, YDCN^{®}-702, YDCN-704, YDPN-601 and YPDN-602 from Tohto Kasei Co., Epicion^{®} 673, N^{®}-680, N^{®}-695, N^{®}-770 and N^{®}-775 produced by Dainippon Ink & Chemicals Inc.,
amino-functional epoxy resins such as YH^{®}-1402 and ST^{®}-110 from Tohto Kasei Co., YL^{®}-931 and YL^{®}-933 from Yuka Shell Co., rubber-modified epoxy resins such as Epicion^{®} TSR-601 from Dainippon Ink & Chemicals Inc., EPX^{®}-84-2 and EPX^{®}4061, naphthalene-containing epoxy structures such as those from Dainippon Ink & Chemicals Inc. Epicion^{®} HP-4710, HP-7250 and HP-9500, silicone-modified epoxy resins such as 1359 from Asahi Denka Kogyo K.K. and other epoxy resins.

The corresponding epoxy equivalent weight (EEW) of these phosphorus-modified resins or resin blends can be up to 8000 g/mol. Structures having good suitability are those with an EEW of 200 g/mol to 4000 g/mol, and preferably those with an EEW of 480 to 3500 g/mol.

Suitable compounds for the production of the phosphorus-modified epoxy resins of the invention are in particular bisphenol, bisphenol A, bisphenol AP, bisphenol B, bisphenol BP, bisphenol C, bisphenol E, bisphenol F, bisphenol FL, bisphenol G, bisphenol M, bisphenol P, bisphenol PH, bisphenol S, bisphenol TMC, bisphenol Z and/or bisphenol K.

Particularly suitable compounds are diglycidyl ethers based on bisphenol A with an epoxy equivalent weight of < 210 g/mol (EEW < 210 g/mol).

The present invention can use, as catalyst, a large number of acids, amines, imidazoles and quaternary phosphonium salts. Catalysts based on quaternary phosphonium and ammonium compounds are particularly suitable, examples being: ethyltriphenylphosphonium chloride, ethyltriphenylphosphonium bromide, ethyltriphenylphosphonium iodide, ethyltriphenylphosphonium acetate, ethyltriphenylphosphonium phosphate, tetrabutylphosphonium chloride, tetrabutylphosphonium bromide, tetrabutylphosphonium iodide, tetrabutylphosphonium acetate, tetrabutylphosphonium acetate acetic acid complexes, butyltriphenylphosphonium tetrabromobisphenate, butyltriphenylphosphonium bisphenate, butyltriphenylphosphonium bromide, butyltriphenylphosphonium bicarbonate, benzyltrimethylammonium chloride, tetramethylammonium hydroxide, butyltriphenylphosphonium chloride, ethyltriphenylphosphonium acetate, ethyltriphenylphosphonium bromide, ethyltriphenylphosphonium iodide, methyltriphenylphosphonium bromide, tetrabutylammonium bromide, tetrapropylammonium bromide, tetraphenylphosphonium bromide and appropriate mixtures thereof.

The flame retardants produced by the process of the invention have a narrow molecular weight distribution, because the catalyst used suppresses sidereactions and prevents the formation of phosphorus-containing dimers (for example anhydrides).

Other fillers and polymers can be added to the phosphorus-modified epoxy resins in order to optimize the desired properties in the final application. Mention may be made here in particular of epoxy resins, flame retardants and additives for the improvement of mechanical strength ("tougheners"). The latter can be compounds from the group of the thermoplastic polymers, elastomers or a core-shell rubber.

The invention is illustrated by the examples which follow.

**Table 1: Components used**

| Abbreviation | Material | Product name | Producer / Supplier |
|---|---|---|---|
| EPN | Epoxy novolac resin | DEN^{®} 438 | Olin (Germany) |
| DGEBA | Diglycidyl ether-bisphenol A resin | Beckopox^{®} EP 140 | Allnex (Germany) |
| TGIC | Triglycidyl isocyanurate | -- | Sigma-Aldrich |
| t-BuGE | tert-Butylglycidyl ether | -- | Aldrich-Aldrich |
| BuDGE | Butanediol diglycidyl ether | -- | Sigma-Aldrich |
| ETPPI | Ethyltriphenylphosphonium iodide | -- | Sigma-Aldrich |
| DEPS | Diethylphosphinic acid | -- | Clariant |
| DPPS | Diphenylphosphinic acid | -- | Clariant |
| EPPS | Ethylphenylphosphinic acid | -- | Clariant |
| DICY | Dicyandiamide | Dyhard^{®} 100S | Alzchem (Germany) |
| TETA | Triethylenetetramine | -- | Sigma-Aldrich |
| DOPO resin | DOPO-modified epoxy resin | Struktol^{®} VP 3735 | Schill-Seilacher (Germany) |

| | | | |
|---|---|---|---|
| -- = no trade name | | | |

**Table 2: Analytical methods**

| Parameter | Unit | Process |
|---|---|---|
| Epoxy equivalent (EEW) | g/mol | DIN 16945: 1989-03 |
| Total phosphorus | m% (mass per cent) | ISO 13730 photometry after pulping |
| NMR | ppm | ³¹P-NMR, ¹H-NMR |
| Viscosity | mPas | Rheometer (in-house method) |
| Isomer ratio (I) / (II) | % | ³¹P-NMR, ¹H-NMR (integral) |
| Proportions | in each case mol% | Epoxy equivalent and NMR |
| X of structure (I) | | |
| Y of structure (II) | | |
| Z of structure (III) | | |
| P dimer | yes / no | ³¹P-NMR |

**Table 3: Abbreviations**

| |
|---|
| Cat1: Ethyltriphenylphosphonium iodide |
| Cat2: Methyltriphenylphosphonium iodide |
| P-1: Diethylphosphinic acid |
| |
| P-2: Methylethylphosphinic acid |

Analysis of the (I):(II) isomer ratio is achieved by means of ³¹P-NMR and ¹H-NMR spectroscopy. The epoxy equivalent leads to a conclusion concerning the proportion of remaining epoxy groups. X, Y and Z can be determined by combining the NMR results with the epoxy equivalent.

### Examples 1 to 4: Bifunctional epoxy resins

### Example 1:

802 g of DGEBA are used as initial charge and heated to 130°C in a flask apparatus with stirrer, reflux condenser, dropping funnel, thermometer and nitrogen supply. 0.1 m% (mass per cent, based on total mass of DEPS and DGEBA) of ETPPI is then added, followed by 258 g of DEPS, whereupon an exothermic reaction is observed. Stirring is then continued for 2 h, and the resultant epoxy resin is discharged in the form of hot liquid.

### Example 2 (comparative)

The reaction is analogous to that of Example 1, but without ethyltriphenylphosphonium iodide as catalyst.

### Example 3

By analogy with Example 1, 1000 g of DGEBA are used as initial charge and heated to 130°C, then 0.1 m% of ethyltriphenylphosphonium iodide is added, followed by 642 g of diethylphosphinic acid, whereupon an exothermic reaction can be observed. Stirring is then continued for 2 h, and the resultant epoxy resin is discharged in the form of hot liquid.

### Example 4 (comparative)

The reaction is analogous to that of Example 3, but without ethyltriphenylphosphonium iodide as catalyst.

| | Example 1 | Example 2 (comparative) | Example 3 | Example 4 (comparative) |
|---|---|---|---|---|
| DGEBA (g) | 802 | 802 | 1000 | 1000 |
| Cat 1 | yes | no | yes | no |
| P1 (g) | 258 | 258 | 642 | 642 |
| m% of P | 6.2 | 6.2 | 9.7 | 9.7 |
| EEW (g/mol) | 482 | 700 | 6000 | 7000 |
| 31P-NMR (DMSO, decoupled) | 61.1 ppm (I); | 61.3 ppm (I); | 61.1 ppm (I); | 61.3 ppm (I); |
| | 61.7 ppm (II) | 61.8ppm (II) | 61.7 ppm (II) | 61.8 ppm (II) |
| Viscosity (at 80°C, 5s⁻¹) | 3450 | 5800 | 16 200 | 16 600 |
| Isomer ratio I/II (from 31P-NMR) | 70/30 | 90/10 | 72/28 | 86/14 |
| X | 35 | 59 | 68 | 82 |
| Y | 15 | 7 | 26 | 13 |
| Z | 50 | 34 | 6 | 5 |
| T = Y / (X+Y) *100% | 30% | 10% | 28% | 14% |
| P dimer by-product | no | yes | no | yes |

In each of the Examples 1 and 3, the products of the invention have a higher proportion of isomer II. The higher proportion of II is discernible from the value of T, which provides the ratio of Y to (X+Y). In each case, therefore, the product of the invention has a lower viscosity than the product of the respective comparative example.

In addition, the products of the invention advantageously comprise no phosphorus-containing dimeric by-products whose unfavourable properties such as increased level of migration and toxicity would render the final product useless.

### Examples 5 to 15: Reaction of polyfunctional epoxides

### Example 5

1000 g of epoxy novolac (DEN^{®} 438 with an EEW of 180 g/mol) are used as initial charge and heated to 130°C in a 2000 ml five-necked flask apparatus with stirrer, reflux condenser, dropping funnel, thermometer and nitrogen supply. 0.1 m% of ethyltriphenylphosphonium iodide (based on total mass) is then added, followed by 73 g of diethylphosphinic acid. Stirring is then continued for 120 min, and the epoxy resin produced is discharged in the form of hot liquid.

The method for Examples 6 to 9 is the same as that for Example 5, but in each case the quantities of diethylphosphinic acid used are as shown in Table 2.

### Example 10

The production process is as in Example 8, but with methyltriphenylphosponium iodide as catalyst instead of ethyltriphenylphosphonium iodide.

### Example 11

The production process is as in Example 8, but with 286 g of ethylmethylphosphinic acid instead of diethylphosphinic acid.

### Example 12 (comparative)

The production process is as in Example 6, but no catalyst was used.

### Example 13 (comparative)

The production process is as in Example 8, but no catalyst was used.

### Example 14 (comparative)

The production process is as in Example 9, but no catalyst was used.

**Table 2: Examples 5 to 11 of the invention and comparative Examples 12 to 15**

| Example | 5 | 6 | 7 | 8 | 9 | 10 | 11 | 12 (comp.) | 13 (comp.) | 14 (comp.) | 15 (comp.) |
|---|---|---|---|---|---|---|---|---|---|---|---|
| Epoxy novolac (g) | 1000 | 1000 | 1000 | 1000 | 1000 | 1000 | 1000 | 1000 | 1000 | 1000 | 1000 |
| Cat 1 | yes | yes | yes | yes | yes | | yes | no | no | no | no |
| Cat 2 | | | | | | yes | | | | | |
| P-1 (diethyl) | 73 | 155 | 210 | 335 | 568 | 335 | | 155 | 335 | 568 | 0 |
| P-2 (MeEt) | | | | | | | 286 | | | | |
| m% of P | 1.7 | 3.4 | 4.2 | 6.4 | 9.2 | 6.4 | 6.4 | 3.2 | 6.4 | 9.2 | 0 |
| EEW (g/mol) | 225 | 273 | 328 | 496 | 2700 | 491 | 503 | 332 | 605 | about 4000 | 181 |
| Viscosity (Pas @ 80°C, 5 s⁻¹) | 11 | 20 | 26 | 36 | 134 | 30 | 39 | 29 | 48 | 165 | 2 |
| Isomer ratio I/II | 62/38 | 67 / 33 | 59/41 | 69/31 | 70/30 | 75 / 25 | 69/31 | 95/5 | 93/7 | 92/8 | - |
| X | 9 | 16 | 20 | 36 | 61 | 38 | 37 | 36 | 58 | 83 | 0 |
| Y | 5 | 8 | 14 | 16 | 26 | 13 | 17 | 2 | 2 | 8 | 0 |
| Z | 86 | 76 | 66 | 48 | 13 | 49 | 46 | 62 | 40 | 9 | 100 |
| T | 36% | 33% | 41% | 31% | 30% | 25% | 31% | 5% | 3% | 9% | - |
| P dimer | no | no | no | no | no | no | no | yes | yes | yes | no |

The above table reveals, with comparable phosphorus content, that the epoxy resins of Examples 5 to 11 produced according to the invention in each case have a higher proportion of isomer II than the products of the respective comparative Examples 12 to 15.

The products of the invention moreover in each case have a lower viscosity than the product of the respective comparative example with comparable phosphorus content, and therefore the products of the invention provide a simple, or the only, method of achieving solvent-free processing. The products of the invention advantageously comprise no phosphorus-containing dimeric by-products whose unfavourable properties such as increased level of migration and toxicity would render the final product useless.

### Examples 16 to 19 of the invention

### Example 16 (with monofunctional epoxide)

100.0 g of tert-butyl glycidyl ether and 0.1 m% of ethyltriphenylphosphonium iodide (based on total content) are used as initial charge and heated to 120°C under nitrogen in a reaction flask with stirrer, reflux condenser, dropping funnel and thermometer, and then 91.8 g of diethylphosphinic acid are slowly added dropwise and stirring is continued for 30 minutes. This gives a colourless liquid product.

### Example 17 (with a trifunctional heterocyclic and nitrogen-containing epoxide)

100.0 g of triglycidyl isocyanurate (TGIC) are used as initial charge and melted in a glass flask with reflux condenser, thermocouple, nitrogen supply and stirrer. 0.1 m% of ethyltriphenylphosphonium iodide (based on total content) is then added and the mixture is stirred, the temperature in the flask is increased to 130°C, and 41.0 g of diethylphosphinic acid are slowly added, with stirring and under a stream of nitrogen, and the mixture is kept at 130°C for 30 min. The product is then discharged in the form of a warm liquid, and cooled.

### Example 18 (with a trifunctional heterocyclic and nitrogen-containing epoxide)

The procedure is as in Example 17, but 123.0 g of diethylphosphinic acid are reacted (instead of 41.0 g).

### Example 19 (difunctional epoxide: butanediol diglycidyl ether)

100.0 g of butanediol diglycidyl ether are used as initial charge in a glass flask with thermometer, nitrogen supply, dropping funnel, condenser and stirrer, and 0.1 m% of ethyltriphenylphosphonium iodide (based on total content) are added, and the mixture is stirred. 120.8 g of diethylphosphinic acid are now added dropwise at a temperature of 130°C. After the reaction has continued for 30 min, the transparent product, which has good flowability, is cooled and discharged.

### Example 20 (comparative, difunctional epoxide: butanediol diglycidyl ether)

100.0 g of butanediol diglycidyl ether are used as initial charge in a glass flask with thermometer, nitrogen supply, dropping funnel, condenser and stirrer, and the mixture is stirred. 120.8 g of diethylphosphinic acid are added dropwise at a temperature of 130°C. After the reaction has continued for 30 min, the product is cooled and discharged.

**Table 3: Examples 16 to 19 and Example 20 (comparative)**

| Example | 16 | 17 | 18 | 19 | 20 (comp.) |
|---|---|---|---|---|---|
| tert-Butyl glycidyl ether (g) | 100 | | | | |
| TGIC (g) | | 100 | 100 | | |
| Butanediol diglycidyl ether (g) | | | | 100 | 100 |
| Cat 1 | yes | yes | yes | yes | no |
| P-1 (diethylphosphinic acid) (g) | 91.8 | 41.0 | 123 | 120.8 | 120.8 |
| m% of P | 11.5 | 7.6 | 14 | 13.9 | 13.9 |
| 31P-NMR | 60.7 ppm (isomer I); 60.6 ppm (isomer II) | 60.9 ppm (isomer I); 61.1 ppm (isomer II) | 60.9 ppm (isomer I); 61.1 ppm (isomer II) | 60.9 ppm (isomer I); 61.2 ppm (isomer II) | 60.9 ppm (isomer I); 61.2 ppm (isomer II) |
| EEW (g/mol) | about 2000 | 221 | about 5000 | about 2500 | about 4900 |
| Viscosity (mPas @ 80°C, 5s-1) | 20 | 11 000 | 7500 | 120 | 255 |
| Isomer ratio A/ B (from 31P-NMR) | 64 / 36 | 67 / 33 | 66 / 34 | 63 / 37 | 82 / 18 |
| X | 58 | 25 | 61 | 57 | 78 |
| Y | 33 | 12 | 31 | 34 | 17 |
| Z | 9 | 63 | 7 | 9 | 5 |
| T = Y/(X+Y)*100% | 36% | 33% | 34% | 37% | 18% |
| Phosphorus-containing dimeric by-product | no | no | no | no | yes |

The examples in the above table reveal in each case for the inventive products 16 to 19 a higher proportion of isomer II than in the product of comparative Example 20.

The inventive product 19 moreover respectively has a lower viscosity than the product of comparative Example 20, thus facilitating solvent-free processing.

## Claims

1. Phosphorus-containing flame retardant mixtures, comprising individual flame retardants having in each case one or more functional groups of the formulae (I), (II) and (III), 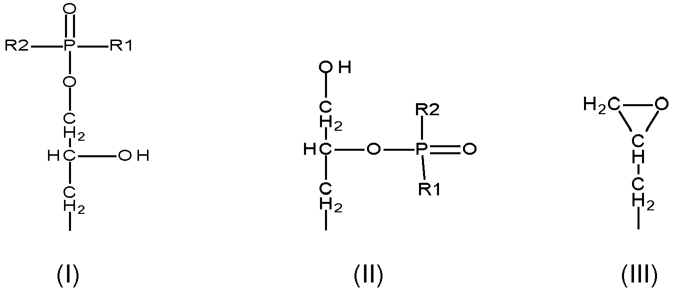
where, based on the total quantity of functional groups in the flame retardant mixture, 1 to 98 mol% of functional groups of the formula (I), 1 to 35 mol% of functional groups of the formula (II) and 1 to 98 mol% of functional groups of the formula (III) are present, and where R¹ and R² are identical or different and are mutually independently hydrogen, C₁- to C₁₂-alkyl, linear or branched, and/or C₆-to C₁₈-aryl and the entirety of (I), (II) and (III) is always 100 mol%,
**characterized in that** in the mixture of the formulae (I) and (II) the proportion T (in mol%) of formula (II) is calculated from T = [y/(x+y)] * 100%, where x is the quantity of formula (I) and y is the quantity of formula (II), in each case in mol%, wherein T is 20 to 45 mol%.

2. Phosphorus-containing flame retardant mixtures according to Claim 1, **characterized in that** R¹ and R² are identical or different and are mutually independently hydrogen, methyl, ethyl, n-propyl, isopropyl, n-butyl, isobutyl, sec-butyl, tert-butyl, n-pentyl, 2-methylbutyl, 3-methylbutyl, 3-methylbut-2-yl, 2-methylbut-2-yl, 2,2-dimethylpropyl, hexyl, heptyl, octyl, nonyl, decyl, cyclopentyl, cyclopentylethyl, cyclohexyl, cyclohexylethyl and/or phenyl.

3. Phosphorus-containing flame retardant mixtures according to Claim 1 or 2, **characterized in that** R¹ and R² are identical or different and are mutually independently methyl, ethyl, n-propyl, isopropyl, n-butyl, isobutyl, sec-butyl and/or tert-butyl.

4. Phosphorus-containing flame retardant mixtures according to at least one of Claims 1 to 3, **characterized in that** they comprise
5 to 94 mol% of formula (I),
3 to 35 mol% of formula (II) and
3 to 92 mol% of formula (III), where the entirety of (I), (II) and (III) is always 100 mol%.

5. Phosphorus-containing flame retardant mixtures according to at least one of Claims 1 to 4, **characterized in that** they comprise
25 to 90 mol% of formula (I),
5 to 30 mol% of formula (II) and
5 to 70 mol% of formula (III), where the entirety of (I), (II) and (III) is always 100 mol%.

6. Phosphorus-containing flame retardant mixtures according to at least one of Claims 1 to 5, **characterized in that** the individual flame retardants having the functional groups (I), (II) and (III) in the flame retardant mixtures correspond to the formulae R²¹-O-(I), R²¹-O-(II) and/or
R²¹-O-(III), where R²¹ means linear or branched alkyl structures having 2 to 8 carbon atoms and/or means polypropylene oxides of the type -[-CH(CH₃)-CH₂-O-]ₖ-H or -[-CH₂-CH(CH₃)-O-]ₖ-H and/or means polyethylene oxides of the type -[-CH₂-CH₂-O-]ₖ-H, where k is in each case an integer from 1 to 12.

7. Phosphorus-containing flame retardant mixtures according to at least one of Claims 1 to 5, **characterized in that** the individual flame retardants having the functional groups (I), (II) and (III) in the flame retardant mixtures correspond to the formula D-O-[-CH₂-CH₂-O-]ᵣ-E and/or
D-O-[-CH(CH₃)-CH₂-O-]ᵣE, where D and E can be identical or different and in each case represent the formula (I), (II) and/or (III), and r is an integer from 1 to 12.

8. Phosphorus-containing flame retardant mixtures according to at least one of Claims 1 to 5, **characterized in that** the individual flame retardants having the functional groups (I), (II) and (III) in the flame retardant mixtures correspond to the formula (IV)
E-Q-D (IV),
where Q represents the following formula (V) 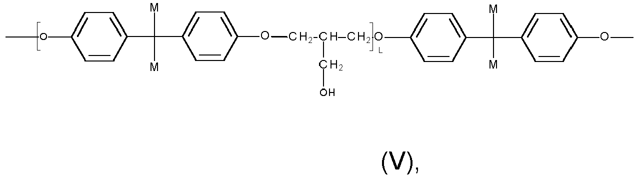 in which M is hydrogen or methyl and where D and E can be identical or different and in each case represent the formulae (I), (II) and/or (III) and L is an integer from 0 to 5.

9. Phosphorus-containing flame retardant mixtures according to at least one of Claims 1 to 5, **characterized in that** the individual flame retardants having the functional groups (I), (II) and (III) in the flame retardant mixtures correspond to the formula (VI) 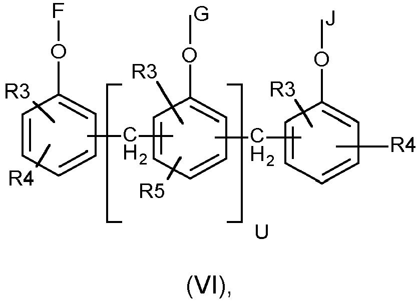 where F, G and J can be identical or different and in each case represent the formulae (I), (II) and/or (III), U is an integer between 1 and 12, R³ is hydrogen, methyl, ethyl, propyl and/or butyl, and R⁴ and R⁵ are mutually independently hydrogen, methyl and/or 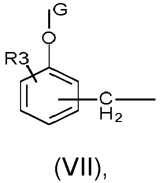 where G and R³ are defined as above.

10. Phosphorus-containing flame retardant mixtures according to at least one of Claims 1 to 5, **characterized in that** the individual flame retardants having the functional groups (I), (II) and (III) in the flame retardant mixtures correspond to the formula (VIII) 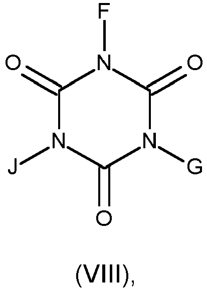 where F, G and J can be identical or different and in each case represent the formulae (I), (II) and/or (III).

11. Phosphorus-containing flame retardant mixtures according to one or more of Claims 1 to 10, **characterized in that** they are non-halogenated in accordance with the standard IEC 61249-2-21 or are halogen-free.

12. Process for the production of flame retardant mixtures according to one or more of Claims 1 to 11, **characterized in that** a reaction of at least one phosphinic acid, alkylphosphinic acid and/or dialkylphosphinic acid with the opened ring of an epoxide takes place in the presence of a catalyst, **characterized in that** the catalyst is ethyltriphenylphosphonium chloride, ethyltriphenylphosphonium bromide, ethyltriphenylphosphonium iodide, ethyltriphenylphosphonium acetate, ethyltriphenylphosphonium phosphate, tetrabutylphosphonium chloride, tetrabutylphosphonium bromide, tetrabutylphosphonium iodide, tetrabutylphosphonium acetate, tetrabutylphosphonium acetate acetic acid complex, butyltriphenylphosphonium tetrabromobisphenate, butyltriphenylphosphonium bisphenate, butyltriphenylphosphonium bromide and/or butyltriphenylphosphonium bicarbonate.

13. Process according to Claim 12, **characterized in that** a dialkylphosphinic acid is reacted with an epoxy novolac at 95°C to 160°C for 1 to 6 hours.

14. Process according to Claim 12 or 13, **characterized in that** the flame retardant mixtures comprise at least one phosphinic ester structure of the formula R¹R²P(=O)O- and the synthesis proceeds by way of a P-O-C bond at the opened epoxide ring, where R¹ and R² are defined as in Claim 1.

15. Use of phosphorus-containing flame retardant mixtures according to one or more of Claims 1 to 11 for the production of epoxy resin formulations.

16. Flame-retardant epoxy resin formulation, **characterized in that** it comprises at least one phosphorus-containing flame retardant mixture according to one or more of Claims 1 to 11, epoxy resins, hardeners, accelerators, rheology additives and/or other additions.

17. Flame-retardant epoxy resin formulation according to Claim 16, **characterized in that** the other additions are light stabilizers, colour pigments, dispersion additives, antifoams, blowing agents, foam-formers, additives for the improvement of mechanical strength, additives for the adjustment of thermal conductivity, glass spheres, glass powders, glass fibre, carbon fibre and/or thixotropizing agents.

18. Process for the production of epoxy resin formulations according to Claim 17, **characterized in that** the phosphorus-containing flame retardant mixtures according to one or more of Claims 1 to 11 are reacted with epoxy resin, hardener, accelerator, rheology additive and optionally other additions.

19. Process according to Claim 18, **characterized in that** no solvents are used.

20. Use of epoxy resin formulations according to Claim 16 or 17 for, or in, flame-retardant composite components, adhesives, pastes, foams, foam compositions, sealing compositions, hotmelt adhesives, fillers, potting compositions, trowelling compositions, finishing mats, coating systems, fibres, prepregs, masking lacquers for soldering, thermally conductive layers, thermally conductive pastes, shock-absorber layers, LEDs, sensors, insulating applications, circuit boards, antennas, and also in coating systems.

## Patentansprüche

1. Phosphorhaltige Flammschutzmittelmischungen, enthaltend einzelne Flammschutzmittel mit jeweils einer oder mehreren funktionellen Gruppen der Formeln (I), (II) und (III), 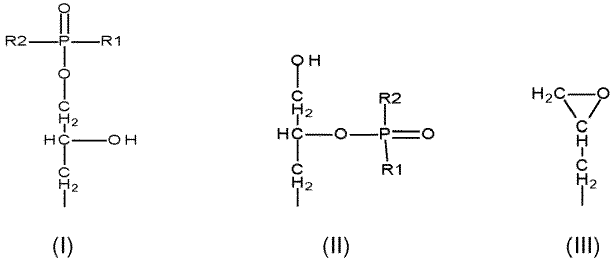
wobei, bezogen auf die Gesamtmenge an funktionellen Gruppen in der Flammschutzmittelmischung, 1 bis 98 Mol-% funktionelle Gruppen der Formel (I), 1 bis 35 Mol-% funktionelle Gruppen der Formel (II) und 1 bis 98 Mol-% funktionelle Gruppen der Formel (III) enthalten sind, und wobei R¹ und R² gleich oder verschieden sind und unabhängig voneinander, Wasserstoff, lineares oder verzweigtes C₁- bis C₁₂-Alkyl und/oder C₆- bis C₁₈-Aryl bedeuten und die Summe von (I), (II) und (III) immer 100 Mol-% beträgt,
**dadurch gekennzeichnet, dass** sich in der Mischung der Formeln (I) und (II) der Anteil T (in Mol-%) an Formel (II) nach T = [y/(x+y)] * 100% ergibt, wobei mit der Maßgabe dass x die Menge an Formel (I) und y die Menge an Formel (II), jeweils in Mol-%, darstellt.

2. Phosphorhaltige Flammschutzmittelmischungen nach Anspruch 1, **dadurch gekennzeichnet, dass** R¹ und R² gleich oder verschieden sind und unabhängig voneinander Wasserstoff, Methyl, Ethyl, n-Propyl, Isopropyl, n-Butyl, Isobutyl, sec-Butyl, tert-Butyl, n-Pentyl, 2-Methylbutyl, 3-Methylbutyl, 3-Methylbut-2-yl, 2-Methylbut-2-yl, 2,2-Dimethylpropyl, Hexyl, Heptyl, Octyl, Nonyl, Decyl, Cyclopentyl, Cyclopentylethyl, Cyclohexyl, Cyclohexylethyl und/oder Phenyl bedeuten.

3. Phosphorhaltige Flammschutzmittelmischungen nach Anspruch 1 oder 2, **dadurch gekennzeichnet, dass** R¹ und R² gleich oder verschieden sind und unabhängig voneinander Methyl, Ethyl, n-Propyl, Isopropyl, n-Butyl, Isobutyl, sec-Butyl und/oder tert-Butyl bedeuten.

4. Phosphorhaltige Flammschutzmittelmischungen nach mindestens einem der Ansprüche 1 bis 3, **dadurch gekennzeichnet, dass** sie
5 bis 94 Mol-% an Formel (I),
3 bis 35 Mol-% an Formel (II) und
3 bis 92 Mol-% an Formel (III) enthalten, wobei die Summe von (I), (II) und (III) immer 100 Mol-% beträgt.

5. Phosphorhaltige Flammschutzmittelmischungen nach mindestens einem der Ansprüche 1 bis 4, **dadurch gekennzeichnet, dass** sie
25 bis 90 Mol-% an Formel (I),
5 bis 30 Mol-% an Formel (II) und
5 bis 70 Mol-% an Formel (III) enthalten, wobei die Summe von (I), (II) und (III) immer 100 Mol-% beträgt.

6. Phosphorhaltige Flammschutzmittelmischungen nach mindestens einem der Ansprüche 1 bis 5, **dadurch gekennzeichnet, dass** die einzelnen Flammschutzmittel mit den funktionellen Gruppen (I), (II) und (III) in den Flammschutzmittelmischungen den Formeln R²¹-O-(I), R²¹-O-(II) und/oder R²¹-O-(III) entsprechen, wobei es sich bei R²¹ um lineare oder verzweigte Alkylstrukturen mit 2 bis 8 Kohlenstoffatomen und/oder um Polypropylenoxide des Typs -[-CH(CH₃)-CH₂-O-]ₖ-H oder -[-CH₂-CH(CH₃)-O-]ₖ-H und/oder um Polyethylenoxide des Typs -[-CH₂-CH₂-O-] ₖ-H handelt, wobei k jeweils eine ganze Zahl von 1 bis 12 bedeutet.

7. Phosphorhaltige Flammschutzmittelmischungen nach mindestens einem der Ansprüche 1 bis 5, **dadurch gekennzeichnet, dass** die einzelnen Flammschutzmittel mit den funktionellen Gruppen (I), (II) und (III) in den Flammschutzmittelmischungen der Formel D-O-[-CH₂-CH₂-O-]ᵣ-E und/oder D-O-[-CH(CH₃)-CH₂-O-]ᵣ-E entsprechen, wobei D und E gleich oder verschieden sein können und jeweils für die Formel (I), (II) und/oder (III) stehen und r eine ganze Zahl von 1 bis 12 bedeutet.

8. Phosphorhaltige Flammschutzmittelmischungen nach mindestens einem der Ansprüche 1 bis 5, **dadurch gekennzeichnet, dass** die einzelnen Flammschutzmittel mit den funktionellen Gruppen (I), (II) und (III) in den Flammschutzmittelmischungen der Formel (IV)
E-Q-D (IV)
entsprechen, wobei Q für die nachfolgende Formel (V) steht 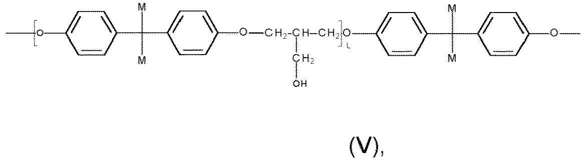 in der M Wasserstoff oder Methyl bedeutet und wobei D und E gleich oder verschieden sein können und jeweils für die Formeln (I), (II) und/oder (III) stehen und L eine ganze Zahl von 0 bis 5 bedeutet.

9. Phosphorhaltige Flammschutzmittelmischungen nach mindestens einem der Ansprüche 1 bis 5, **dadurch gekennzeichnet, dass** die einzelnen Flammschutzmittel mit den funktionellen Gruppen (I), (II) und (III) in den Flammschutzmittelmischungen der Formel (VI) 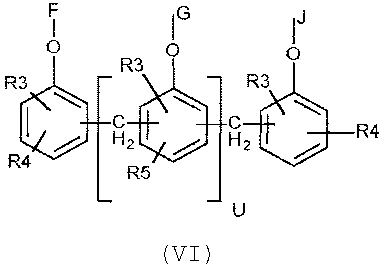 entsprechen, wobei F, G und J gleich oder verschieden sein können und jeweils für die Formeln (I), (II) und/oder (III) stehen, U eine ganze Zahl zwischen 1 und 12 bedeutet, R³ Wasserstoff, Methyl, Ethyl, Propyl und/oder Butyl bedeutet sowie R⁴ und R⁵ unabhängig voneinander Wasserstoff, Methyl und/oder 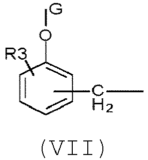 bedeuten, wobei G und R³ wie zuvor definiert sind.

10. Phosphorhaltige Flammschutzmittelmischungen nach mindestens einem der Ansprüche 1 bis 5, **dadurch gekennzeichnet, dass** die einzelnen Flammschutzmittel mit den funktionellen Gruppen (I), (II) und (III) in den Flammschutzmittelmischungen der Formel (VIII) 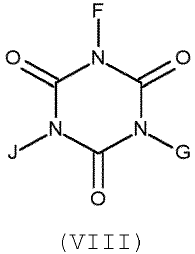 entsprechen, wobei F, G und J gleich oder verschieden sein können und jeweils für die Formeln (I), (II) und/oder (III) stehen.

11. Phosphorhaltige Flammschutzmittelmischungen nach einem oder mehreren der Ansprüche 1 bis 10, **dadurch gekennzeichnet, dass** sie die Halogenfreiheit nach der Norm IEC 61249-2-21 erfüllen oder halogenfrei sind.

12. Verfahren zur Herstellung von Flammschutzmittelmischungen nach einem oder mehreren der Ansprüche 1 bis 11, **dadurch gekennzeichnet, dass** eine Umsetzung mindestens einer Phosphinsäure, Alkylphosphinsäure und/oder Dialkylphosphinsäure mit dem geöffneten Ring eines Epoxids in Anwesenheit eines Katalysators erfolgt, **dadurch gekennzeichnet, dass** es sich bei dem Katalysator um Ethyltriphenylphosphoniumchlorid, Ethyltriphenylphosphoniumbromid, Ethyltriphenylphosphoniumiodid, Ethyltriphenylphosphoniumacetat, Ethyltriphenylphosphoniumphosphat, Tetrabutylphosphoniumchlorid, Tetrabutylphosphoniumbromid, Tetrabutylphosphoniumiodid, Tetrabutylphosphoniumacetat, Tetrabutylphosphoniumacetat-Essigsäure-Komplex, Butyltriphenylphosphoniumtetrabromobisphenat, Butyltriphenylphosphoniumbisphenat, Butyltriphenylphosphoniumbromid und/oder Butyltriphenylphosphoniumbicarbonat handelt.

13. Verfahren nach Anspruch 12, **dadurch gekennzeichnet, dass** eine Dialkylphosphinsäure mit einem Epoxy-Novolac bei 95 °C bis 160 °C für 1 bis 6 Stunden umgesetzt wird.

14. Verfahren nach Anspruch 12 oder 13, **dadurch gekennzeichnet, dass** die Flammschutzmittelmischungen mindestens eine Phosphinsäureesterstruktur der Formel R¹R²P(=O)O- umfassen und die Synthese über eine P-O-C-Bindung am geöffneten Epoxidring erfolgt, wobei R¹ und R² wie in Anspruch 1 definiert sind.

15. Verwendung von phosphorhaltigen Flammschutzmittelmischungen nach einem oder mehreren der Ansprüche 1 bis 11 zur Herstellung von Epoxidharzformulierungen.

16. Flammgeschützte Epoxidharzformulierung, **dadurch gekennzeichnet, dass** sie mindestens eine phosphorhaltige Flammschutzmittelmischung nach einem oder mehreren der Ansprüche 1 bis 11, Epoxidharze, Härter, Beschleuniger, Rheologieadditive und/oder weitere Zusätze enthält.

17. Flammgeschützte Epoxidharzformulierung nach Anspruch 16, **dadurch gekennzeichnet, dass** es sich bei den weiteren Zusätzen um Lichtschutzmittel, Farbpigmente, Dispergieradditive, Entschäumer, Treibmittel, Schaumbildner, Additive zur Verbesserung der mechanischen Beständigkeit, Additive zur Einstellung der Wärmeleitfähigkeit, Glaskugeln, Glaspulver, Glasfaser, Carbonfaser und/oder Thixotropiermittel handelt.

18. Verfahren zur Herstellung von Epoxidharzformulierungen nach Anspruch 17, **dadurch gekennzeichnet, dass** die phosphorhaltigen Flammschutzmittelmischungen nach einem oder mehreren der Ansprüche 1 bis 11 mit Epoxidharz, Härter, Beschleuniger, Rheologieadditiv und gegebenenfalls weiteren Zusätzen umgesetzt wird.

19. Verfahren nach Anspruch 18, **dadurch gekennzeichnet, dass** keine Lösungsmittel eingesetzt werden.

20. Verwendung von Epoxidharzformulierungen nach Anspruch 16 oder 17 für oder in flammgeschützten Verbundbauteilen, Klebstoffen, Pasten, Schäumen, Schaummassen, Verschlussmassen, Heißschmelzklebern, Füllern, Vergussmassen, Spachtelmassen, Abschlussmatten, Beschichtungssystemen, Fasern, Prepregs, Lötstopplacken, thermisch leitfähigen Schichten, Wärmeleitpasten, Schockabsorberschichten, LEDs, Sensoren, Isolieranwendungen, Leiterplatten, Antennen sowie in Beschichtungssystemen.

## Revendications

1. Mélanges d'agents ignifugeants contenant du phosphore, comprenant des agents ignifugeants individuels ayant chacun un ou plusieurs groupes fonctionnels parmi les formules (I), (II) et (III), 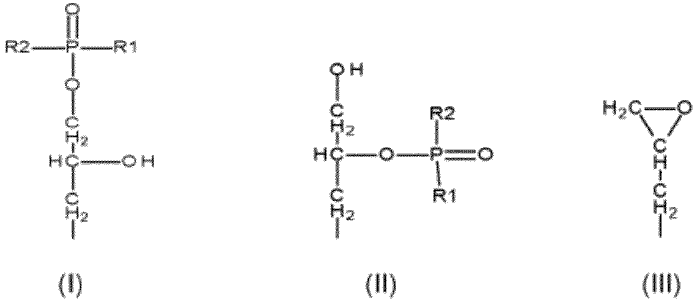
où, sur la base de la quantité totale de groupes fonctionnels dans le mélange d'agents ignifugeants, 1 à 98 % en moles de groupes fonctionnels de la formule (I), 1 à 35 % en moles de groupes fonctionnels de la formule (II) et 1 à 98 % en moles de groupes fonctionnels de la formule (III) sont présents, et où R¹ et R² sont identiques ou différents et sont mutuellement indépendamment hydrogènes, alkyle en C₁ à C₁₂, linéaire ou ramifié, et/ou aryle en C₆ à C₁₈ et l'entièreté de (I), (II) et (III) est toujours 100 % en moles,
**caractérisés en ce que** dans le mélange des formules (I) et (II) la proportion T (en % en moles) de la formule (II) est calculée à partir de T = [y/ (x + y)]*100 %, où y est la quantité de formule (I) et y est la quantité de (II), en chaque cas en % en moles, T étant 20 à 45 % en moles.

2. Mélanges d'agents ignifugeants contenant du phosphore selon la revendication 1, **caractérisés en ce que** R¹ et R² sont identiques ou différents et sont mutuellement indépendamment hydrogène, méthyle, éthyle, n-propyle, isopropyle, n-butyle, isobutyle, sec-butyle, tert-butyle, n-pentyle, 2-méthylbutyle, 3-méthylbutyle, 3-méthylbut-2-yl, 2-méthylbut-2-yle, 2,2-diméthylpropyle, hexyle, heptyle, octyle, nonyle, décyle, cyclopentyle, cyclopentyléthyle, cyclohexyle, cyclohexyléthyle et/ou phényle.

3. Mélanges d'agents ignifugeants contenant du phosphore selon la revendication 1 ou 2, **caractérisés en ce que** R¹ et R² sont identiques ou différents et sont mutuellement indépendamment méthyle, éthyle, n-propyle, isopropyle, n-butyle, isobutyle, sec-butyle et/ou tert-butyle.

4. Mélanges d'agents ignifugeants contenant du phosphore selon au moins l'une des revendications 1 à 3, **caractérisés en ce qu'**ils comprennent
5 à 94 % en moles de formule (I),
3 à 35 % en moles de formule (II) et
3 à 92 % en moles de formule (III), où l'entièreté de (I), (II) et (III) est toujours 100 % en moles.

5. Mélanges d'agents ignifugeants contenant du phosphore selon au moins l'une des revendications 1 à 4, **caractérisés en ce qu'**ils comprennent
25 à 90 % en moles de formule (I),
5 à 30 % en moles de formule (II) et
5 à 70 % en moles de formule (III), où l'entièreté de (I), (II) et (III) est toujours 100 % en moles.

6. Mélanges d'agents ignifugeants contenant du phosphore selon au moins l'une des revendications 1 à 5, **caractérisés en ce que** les agents ignifugeants individuels ayant les groupes fonctionnels (I), (II) et (III) dans les mélanges d'agents ignifugeants correspondent aux formules **R²¹-O-(I), R²¹-O-(II)** et/ou **R²¹-O-(III),** où R²¹ signifie des structures alkyle linéaire ou ramifié ayant 2 à 8 atomes de carbone et/ou des oxydes de propylène du type **-[-CH(CH₃)-CH₂-O-]ₖ-H** ou **-[-CH₂-CH(CH₃)-O-]ₖ-H** et/ou signifie des poly(oxyde d'éthylène) du type **-[-CH₂-CH₂-O-]ₖ-H,** où k est en chaque cas un entier de 1 à 12.

7. Mélanges d'agents ignifugeants contenant du phosphore selon au moins l'une des revendications 1 à 5, **caractérisés en ce que** les agents ignifugeants individuels ayant les groupes fonctionnels (I), (II) et (III) dans les mélanges d'agents ignifugeants correspondent à la formule **D-O-[-CH₂-CH₂-O-]ᵣ-E** et/ou **D-O-[-CH(CH₃)-CH₂-O-]ᵣ-E,** où D et E peuvent être identiques ou différents et en chaque cas représentent la formule (I), (II) et/ou (III), et r est un entier de 1 à 12.

8. Mélanges d'agents ignifugeants contenant du phosphore selon au moins l'une des revendications 1 à 5, **caractérisés en ce que** les agents ignifugeants individuels ayant les groupes fonctionnels (I), (II) et (III) dans les mélanges d'agents ignifugeants correspondent à la formule (IV)
**E-Q-D** **(IV),**
où Q représente la formule suivante (V) 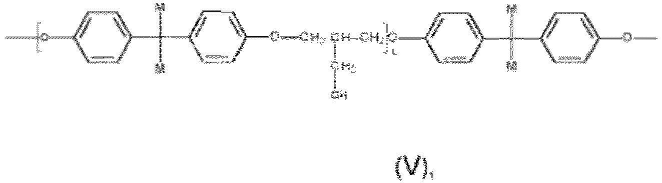 dans laquelle M est hydrogène ou méthyle et où D et E peuvent être identiques ou différents et en chaque cas représentent les formules (I), (II) et/ou (III), et L est un entier de 0 à 5.

9. Mélanges d'agents ignifugeants contenant du phosphore selon au moins l'une des revendications 1 à 5, **caractérisés en ce que** les agents ignifugeants individuels ayant les groupes fonctionnels (I), (II) et (III) dans les mélanges d'agents ignifugeants correspondent à la formule (VI) 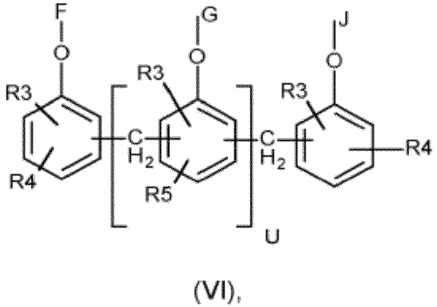 où F, G et J peuvent être identiques ou différents et en chaque cas représentent les formules (I), (II) et/ou (III), U est un entier compris entre 1 et 12, R³ est hydrogène, méthyle, éthyle, propyle et/ou butyle, et R⁴ et R⁵ sont mutuellement indépendamment hydrogène, méthyle et/ou 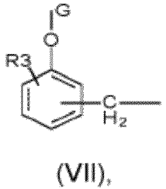 où G et R³ sont tels que définis ci-dessus.

10. Mélanges d'agents ignifugeants contenant du phosphore selon au moins l'une des revendications 1 à 5, **caractérisés en ce que** les agents ignifugeants individuels ayant les groupes fonctionnels (I), (II) et (III) dans les mélanges d'agents ignifugeants correspondent à la formule (VIII) 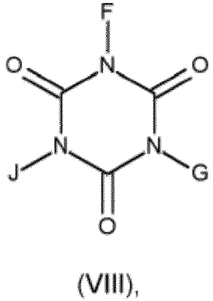 où F, G et J peuvent être identiques ou différents et en chaque cas représentent les formules (I), (II) et/ou (III).

11. Mélanges d'agents ignifugeants contenant du phosphore selon l'une ou plusieurs des revendications 1 à 10, **caractérisés en ce qu'**il sont non halogénés conformément à la norme IEC 61249-2-21 ou sans halogène.

12. Procédé pour la production de mélanges d'agents ignifugeants selon l'une ou plusieurs des revendications 1 à 11, **caractérisé en ce qu'**une réaction d'au moins un acide phosphinique, acide alkylphosphinique et/ou acide dialkylphosphinique avec le cycle ouvert d'un époxyde a lieu en la présence d'un catalyseur, **caractérisé en ce que** le catalyseur est le chlorure d'éthyltriphénylphosphonium, le bromure d'éthyltriphénylphosphonium, l'iodure d'éthyltriphénylphosphonium, l'acétate d'éthyltriphénylphosphonium, le phosphate d'éthyltriphénylphosphonium, le chlorure de tétrabutylphosphonium, le bromure de tétrabutylphosphonium, l'iodure de tétrabutylphosphonium, l'acétate de tétrabutylphosphonium, le complexe acide acétique acétate de tétrabutylphosphonium, le tétrabromobisphénate de butyltriphénylphosphonium, le bisphénate de butyltriphénylphosphonium, le bromure de butyltriphénylphosphonium et/ou le bicarbonate de butyltriphénylphosphonium.

13. Procédé selon la revendication 12, **caractérisé en ce qu'**un acide dialkylphosphinique est mis à réagir avec un époxy novolaque à une température de 95 °C à 160 °C pendant 1 à 6 heures.

14. Procédé selon la revendication 12 ou 13, **caractérisé en ce que** les mélanges d'agents ignifugeants comprennent au moins une structure d'ester phosphinique de la formule **R¹R²P(=O)O-** et la synthèse procède par voie d'une liaison P-O-C au niveau du cycle d'époxyde ouvert, où R¹ et R² sont définies comme dans la revendication 1.

15. Utilisation de mélanges d'agents ignifugeants contenant du phosphore selon l'une ou plusieurs des revendications 1 à 11 pour la production de formulations de résine époxy.

16. Formulation de résine époxy ignifugeante, **caractérisée en ce qu'**elle comprend au moins un mélange d'agents ignifugeants contenant du phosphore selon l'une ou plusieurs des revendications 1 à 11, des résines époxy, des agents de durcissement, des accélérateurs, des additifs de rhéologie et/ou d'autres ajouts.

17. Formulation de résine époxy ignifugeante selon la revendication 16, **caractérisée en ce que** les autres ajouts sont des photostabilisants, des pigments de couleur, des additifs de dispersion, des agents antimousses, des agents de gonflement, des agents de formation de mousse, des additifs pour l'amélioration de la résistance mécanique, des additifs pour l'ajustement de la conductivité thermique, des sphères de verre, des poudres de verre, une fibre de verre, une fibre de carbone et/ou des agents thixotropiques.

18. Procédé pour la production de formulations de résine époxy selon la revendication 17, **caractérisé en ce que** les mélanges d'agents ignifugeants contenant du phosphore selon l'une ou plusieurs des revendications 1 à 11 sont mis à réagir avec une résine époxy, un agent de durcissement, un accélérateur, un additif de rhéologie et éventuellement d'autres ajouts.

19. Procédé selon la revendication 18, **caractérisé en ce qu'**aucun solvant n'est utilisé.

20. Utilisation de formulations de résine époxy selon la revendication 16 ou 17 pour, ou dans, des composants composites ignifugeants, des adhésifs, des pâtes, des mousses, des compositions de mousse, des compositions d'étanchéité, des adhésifs thermofusibles, des charges, des compositions d'enrobage, des compositions de talochage, des mats de finition, des systèmes de revêtement, des fibres, des préimprégnés, des vernis de masquage pour soudure, des couches thermiquement conductrices, des pâtes thermiquement conductrices, des couches d'absorbeur de chocs, des LED, des capteurs, des applications d'isolation, des cartes de circuit, des antennes et également dans des systèmes de revêtement.
